# EUROPÄISCHE PATENTSCHRIFT

(11) **EP 3 276 855 B1**
(45) Veröffentlichungstag und Bekanntmachung des Hinweises auf die Patenterteilung: **07.10.2020**
(21) Anmeldenummer: 17179803.6
(22) Anmeldetag: 05.07.2017
(51) Int. Cl.: H04B 10/118, H04J 14/02

(54) **VERFAHREN ZUM ÜBERTRAGEN EINES BINÄREN DATENSIGNALS ÜBER EINEN OPTISCHEN FEEDER-LINK ZU ODER VON EINEM SATELLITEN**
TRANSMITTER AND RECEIVER DEVICES FOR DIGITAL DATA TRANSMISSION OVER SATELLITE OPTICAL FEEDER LINK
PROCÉDÉ DE TRANSMISSION D'UN SIGNAL DE DONNÉES BINAIRE PAR L'INTERMÉDIAIRE D'UNE LIAISON D'ALIMENTATION OPTIQUE OU D'UN SATELLITE

(30) Priorität: 27.07.2016 DE 102016213764
(43) Veröffentlichungstag der Anmeldung: 31.01.2018
(73) Patentinhaber: Deutsches Zentrum für Luft- und Raumfahrt e.V., 51147 Köln (DE)
(72) Erfinder: Dimitrov, Dr. Svilen, 81927 München (DE)
(74) Vertreter: dompatent von Kreisler Selting Werner - Partnerschaft von Patent- und Rechtsanwälten mbB

(56) Entgegenhaltungen:
- EP-A1- 0 863 627
- WO-A1-03/084118
- WO-A2-01/84451
- US-B1- 7 142 566
- B. G. Evans: "Satellite Communication Systems - Google Books", , 31. Dezember 1999 (1999-12-31), XP055411688, Gefunden im Internet: URL:https://books.google.de/books?id=T2eD0 -pP_0UC&pg=PA450&lpg=PA450&dq=single+bit+s tream+satellite+communication&source=bl&ot s=1STKLBKVCc&sig=GuhjWP5UB3HFb11tQM9c5cVtW SU&hl=de&sa=X&ved=0ahUKEwiy29iVvNHWAhVLKlA KHdvECDsQ6AEIRTAI#v=onepage&q=single bit stream satellite communication&f=false [gefunden am 2017-10-02]

## Beschreibung

Die Erfindung betrifft ein Verfahren zum Übertragen eines binären Datensignals über einen optischen Feeder-Link zu oder von einem Satelliten.

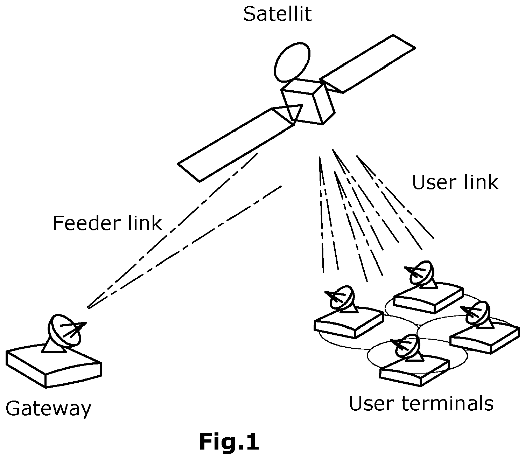

Im Forward Link eines Satelliten übermittelt ein Gateway Datensignale unter Verwendung eines Satelliten an die Nutzer. Ein derartiges Szenario ist in Fig. 1 dargestellt.

Derartige Systeme sowie entsprechende Übertragungsverfahren sind in folgenden Veröffentlichungen dargestellt:
[1] "ICT-2011.1.1 BATS D4.1: Satellite Network Mission Requirements", Broadband Access via Integrated Terrestrial and Satellite Systems (BATS) European Project, Tech. Rep., 2012.
[2] "Optimised Smart Gateway Diversity for BATS", Broadband Access via Integrated Terrestrial and Satellite Systems (BATS) European Project, BATS Factsheet 8, May 2014.
[3] Second Generation Framing Structure, Channel Coding and Modulation Systems for Broadcasting, Interactive Services, News Gathering and Other Broadband Satellite Applications; Part II: S2-Extensions (DVBS2X), Digital Video Broadcasting (DVB) Std. ETSI EN 302 307-2, Oct. 2014.
[4] Implementation Guidelines for the Second Generation System for Broadcasting, Interactive Services, News Gathering and Other Broadband Satellite Applications; Part II: S2-Extensions (DVB-S2X), Digital Video Broadcasting (DVB) Std. ETSI TR 102 376-2, Mar. 2015.

Ein aus dem Stand der Technik bekanntes Satellitensystem wie es beispielsweise in Veröffentlichung 1 beschreiben ist, weist eine Anzahl von Gateways N_{gw} auf, die eine Anzahl von Spot Beams bedienen. Bei einer großen Anzahl von Spot Beams (bspw. bis zu 151 Spot Beams pro Satellit gemäß Veröffentlichung [2]) wird aufgrund der Einschränkung des Spektrums im Feeder-Link zum Beispiel im Radiofrequenz (RF) V-Band eine große Anzahl von Gateways (z.B. bis zu 29 Gateways, siehe Veröffentlichung [2]) benötigt.

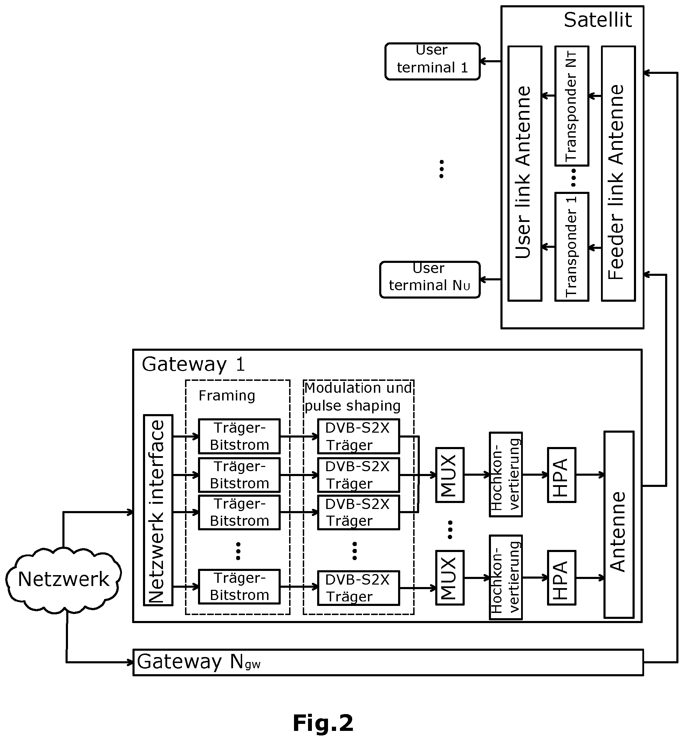

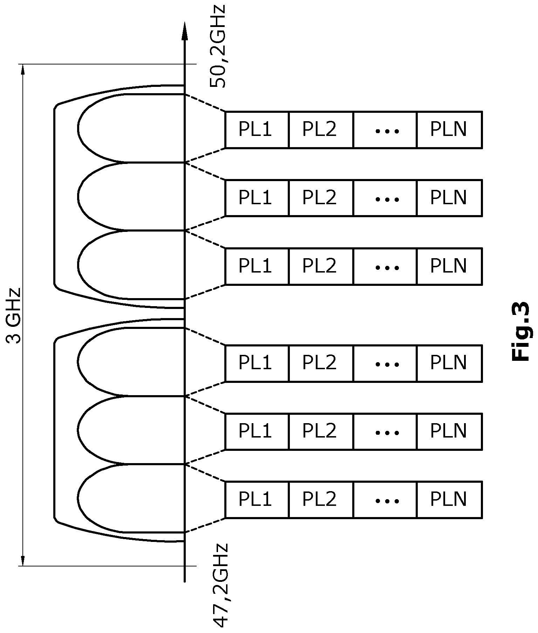

Der Aufbau des Übertragungssystems im Feeder-Link, wie er aus dem Stand der Technik bekannt ist, ist in Fig. 2 dargestellt. In dem Forward-Link Standard DVB-S2X gemäß Veröffentlichung 3 werden einer oder mehrere Träger einem User Beam zugeordnet. Beispielsweise werden in dem Breitband Multicarrier Referenzszenario, das in Veröffentlichung 4 spezifiziert ist, drei Träger von etwa je 500 MHz zu einem User Beam zugeordnet. Dies führt zu einem 1,5 GHz Spektrum pro User Beam wie es in Fig. 3 dargestellt ist. Jeder Träger wird moduliert durch einen pulsförmigen Strom von Super-Frames, die aus gebündelten Physical-Layer-Frames bestehen. Unter Berücksichtigung des RF-V-Bandes, das im Feeder-Link verwendet wird, können nur zwei Beams im Spektrum untergebracht werden, was zu einem starken Anstieg der benötigten Gateways führt.

Jeder Träger-Bit-Strom ist in Physical Layer Frames eingerahmt. Nach Modulation unter Verwendung von Amplitude- and Face-Shift-Keying (APSK) und Pulse Shaping durch einen Square Root Raised Cosine Filter (SRRCF) werden bis zu drei DVB-S2X-Träger pro Beam gemultiplext. Nach einem Hochkonvertieren auf die Trägerfrequenz im RF-V-Band wird das Signal durch einen Hochleistungsverstärker verstärkt und über die Gateway Antenne übertragen.

Beim Satelliten wird das Signal durch die Feeder-Link Antenne empfangen. Die Beam-Ströme werden gefiltert, verstärkt und frequenzkonvertiert auf die Trägerfrequenz im User Link, im RF Ka-Band unter Verwendung von N_{T} Transpondern. Das Signal wird dann durch die User Link Antenne zu den N_{U} Userterminals übermittelt.

Der Return Link führt die umgekehrten Operationen aus und der Return Feeder-Link wird dem RF Q-Band zugeordnet.

Aufgabe der Erfindung ist es, ein Verfahren zum Übertragen eines Datensignals zu oder von einem Satelliten bereitzustellen, bei dem eine geringere Anzahl an Gateways benötigt wird. Es soll ferner ein Verfahren zum Empfangen und Verarbeiten eines binären Datensignals in der Satellitenkommunikation bereitgestellt werden.

Die Lösung der Aufgabe erfolgt erfindungsgemäß durch die Merkmale der Ansprüche 1 und 7.

Im erfindungsgemäßen Verfahren wird ein binäres Datensignal über einen optischen Feeder-Link zu oder von einem Satelliten übertragen. Hierbei werden in einem optischen Sendeinterface die folgenden Schritte durchgeführt:
Multiplexing von binären Physical-Layer-Frames, die mehreren Trägern, und/oder mehreren Beams im Satellitenkommunikationssystem zugeordnet sind in einen einzigen Bitstrom,
Einfügen einer binären Physical-Layer-Frame-Identifizierungssequenz vor jedem Physical-Layer-Frame, wobei die Physical-Layer-Frame-Identifizierungssequenz aufweist:
   eine eindeutige binäre Synchronisationssequenz,
   eine binäre Beam-Index-Sequenz,
   eine binäre Trägerfrequenz-Index-Sequenz,
   eine binäre Baud-Raten-Index-Sequenz,
   eine binäre Roll-Off-Factor-Index-Sequenz,
   eine binäre Modulationsindex-Sequenz.

Das erfindungsgemäße Verfahren wird im Feeder-Link eines Satelliten verwendet, wobei die Datenkommunikation entweder in Richtung des Satelliten oder umgekehrt stattfinden kann. Dies bedeutet, dass entweder der Satellit der Sender und das Gateway der Empfänger sein kann oder umgekehrt. Auf beiden Seiten der Übertragungsstrecke befindet sich ein optisches Interface, nämlich einmal ein optisches Sendeinterface, das bereits beschrieben wurde und einmal ein optisches Empfängerinterface, das noch näher beschrieben wird. Es ist bevorzugt, dass dieses Interface nach dem Framingblock angeordnet ist, wo die bitweise Darstellung der Physical-Layer-Frames in jedem Träger pro Beam generiert wird. Um die Information über die Struktur des darunter liegenden Trägerbitstroms zu erhalten und um ferner eine richtige Zuordnung der Physical-Layer-Frames zu den Trägern und Beams aufrechtzuerhalten wird die beschreibende Physical-Layer-Frame-Identifizierungssequenz verwendet.

Die Länge der genannten Bit-Sequenzen kann derart gewählt werden, dass genug Bits vorhanden sind, um die benötigte Information zu übertragen.

In bevorzugter Ausführungsform weisen zumindest einige Sequenzen der Physical-Layer-Frame-Identifizierungssequenz Redundanzbits auf, um unanfälliger gegenüber sporadischen Störungen auf dem Übertragungskanal zu sein.

In einer weiteren bevorzugten Ausführungsform weist das optische Sendeinterface einen Datenpuffer zur Speicherung des binären Datenstroms der Physical-Layer-Frames auf, um Differenzen in der Baud-Rate der Träger auszugleichen.

Es ist bevorzugt, dass die Physical-Layer-Frames unverändert bleiben, so dass das Verfahren gegenüber zukünftigen Modifikationen des DVB-S2X Übertragungsstandards transparent bleibt.

Es ist weiterhin bevorzugt, dass der binäre Datenstrom am Ausgang des optischen Sender Interface verwendet wird, um einen optischen Träger, zum Beispiel einen Laser zu modulieren. Die optischen Träger werden dann einem Dense Wave Length Division Multiplexing (DWDM) Grid zugeordnet. Abhängig von der Größe des gewählten DWDM Grid kann eine Anzahl von Beams (N Beams) dem DWDM Channel zugeordnet werden.

Das DWDM gemultiplexte optische Signal wird beispielsweise durch einen Erbium Doped Fiber Amplifier (EDFA) verstärkt und über dem Feeder-Link unter Verwendung des optischen Teleskop Transmitters übertragen.

Es ist bevorzugt, dass zur Modulation des optischen Trägersignals kohärente Modulation, insbesondere Amplituden- oder Phasenmodulation verwendet wird.

Alternativ kann zur Modulation des optischen Trägersignals zur Modulation des optischen Trägersignals inkohärente Intensitätsmodulation, insbesondere Puls-Amplituden oder Puls-Position-Modulation verwendet werden.

Die Erfindung betrifft ferner ein Verfahren zum Empfangen und Verarbeiten eines binären Datensignals, das über einen optischen Feeder-Link zu oder von einem Satelliten übertragen wurde. Die Übertragung kann hierbei gemäß dem bisher beschriebenen Verfahren stattfinden. Ein optisches Empfangsinterface führt die folgenden Schritte aus:
Synchronisation des binären Datenstroms unter Verwendung der eindeutigen binären Synchronisationssequenz
Extraktion der entsprechenden Physical-Layer-Frames.

Auf der Seite des Satelliten wird das optische Signal somit durch ein Empfangsteleskop empfangen. Das Signal kann erneut durch einen EDFA verstärkt werden. Nach einem DWDM Demultiplexer kann jeder optische Träger im DWDM Kanal durch eine Photodiode und einen Demodulator demoduliert werden, um den digitalen Bitstrom wieder herzustellen.

Zusätzlich können eventuell vorhandene Redundanzbits in der Physical-Layer-Frame Identifizierungssequenz entfernt werden.

Da der Physical-Layer-Datenstrom eine Struktur aufweist, in der jedem Physical-Layer Frame Identifier ein Physical-Layer-Frame erfolgt, können die Frames, die einem DVB-S2X-Träger zugeordnet sind, aus diesem Datenstrom wiederhergestellt werden. Die eindeutige Synchronisierungsbitsequenz erlaubt hierbei die Extraktion der Physical-Layer-Frames. Diese werden dann moduliert gemäß dem Modulationsformat, das in dem Physical-Layer-Frame-Identifier angegeben ist, ohne, dass der Physical-Layer-Header selbst dekodiert werden muss.

Es ist bevorzugt, dass die Physical-Layer-Frames moduliert und durch Pulse Shaping bearbeitet werden, um ein Trägersignal zu bilden gemäß dem Modulationsindex, dem Roll-Off-Faktor-Index und dem Baud-Raten Index in der Physical-Layer-Frame-Identifizierungssequenz.

Die DVB-S2X Träger können anschließend gemultiplext und hochkonvertiert werden gemäß dem Trägerfrequenzindex und dem Beam Index in der Physical-Layer-Frame-Identifizierungssequenz. Das Hochkonvertieren kann beispielsweise auf eine Frequenz erfolgen, die im User-Link verwendet wird, zum Beispiel das Ka-Band.

Die Beamsignale können dann gefiltert und verstärkt werden, um dann über den User Link an die Nutzer gesendet zu werden.

Auf beiden Seiten der Übertragungsstrecke können die optischen Interfaces durch FPGA Module implementiert werden.

Im Folgenden werden bevorzugte Ausführungsformen der Erfindung anhand von Figuren erläutert. Es zeigen:
- Fig. 1: eine schematische Darstellung eines Forward Link in der Satellitenkommunikation,
- Fig. 2: die Übertragungskette eines Satelliten Forward Link gemäß dem Stand der Technik,
- Fig. 3: die Zuordnung im Trägerspektrum im RF V-Band gemäß dem Stand der Technik,
- Fig. 4: eine Ausführungsform der Übertragungskette der Erfindung,
- Fig. 5: die Zuordnung der Beams in einem DWDM Channel in einem erfindungsgemäßen Verfahren.

Fign. 1 bis 3 wurden bereits in Zusammenhang mit dem Stand der Technik erläutert.

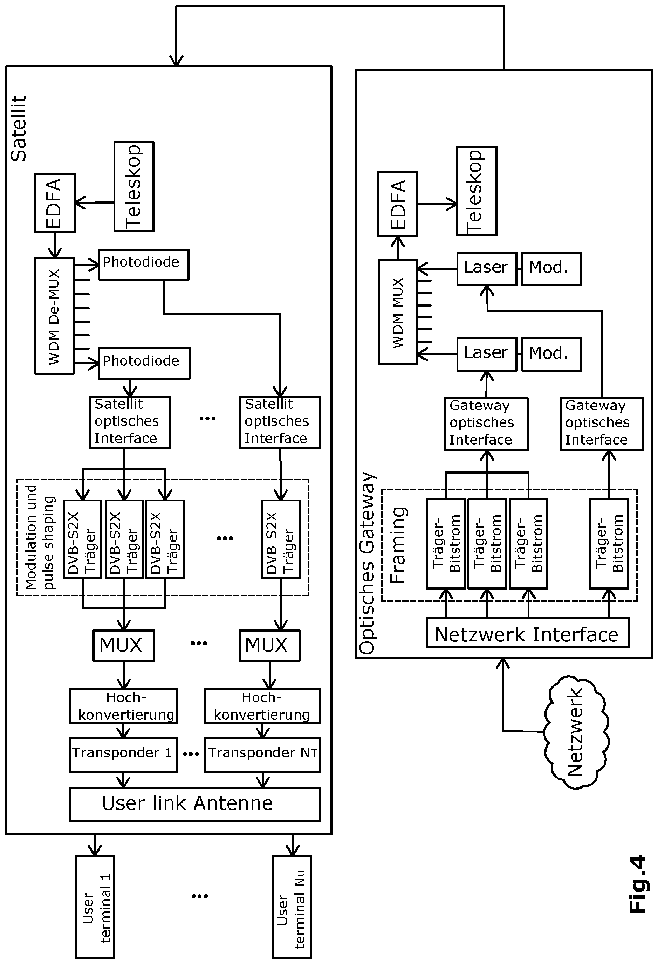

In Fig. 4 ist eine Ausführungsform der optischen Übertragungskette des erfindungsgemäßen Verfahrens dargestellt. Die von einem Netzwerk kommenden Daten werden über ein NetzwerkInterface einem Framing Block zugeführt. Der binäre Datenstrom am Ausgang der optischen Gateway Interfaces wird verwendet, um ein optisches Trägersignal eines Lasers in einem DWDM Kanal zu modulieren. Nach einem Multiplexing und einem Verstärken wird das Signal dem Teleskop zugeführt und über den Übertragungskanal gesendet.

Auf Empfängerseite findet eine Verarbeitung des Signals in umgekehrter Reihenfolge statt, wie es bereits in der vorliegenden Anmeldung dargestellt wurde. Dies ist im oberen Bereich der Fig. 2 dargestellt.

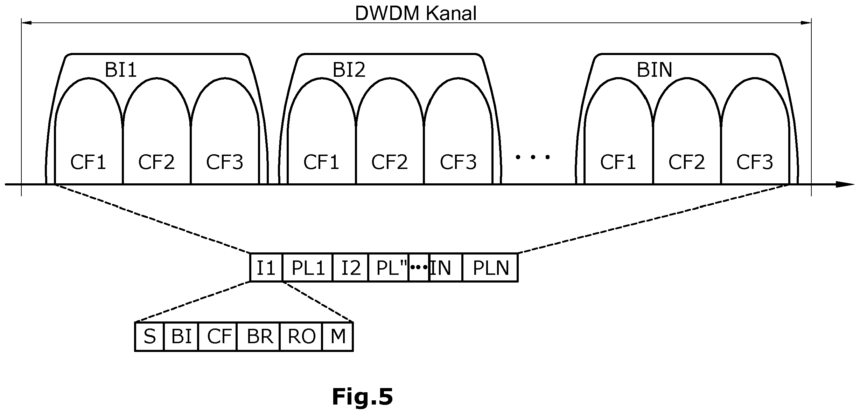

Die Zuordnung der Beams in einem DWDM Channel ist in Form eines gemultiplexten Physical-Layer-Bitstroms ist in Fig. 5 dargestellt. Die Darstellung enthält die Physical-Layer-Frame-Indentifikationssequenz I1 bis IN, die vor jedem Physical-Layer Frame angeordnet ist. Diese Sequenz enthält die folgenden Informationen:
eine eindeutige binäre Synchronisationssequenz (S),
eine binäre Beam-Index-Sequenz (BI),
eine binäre Trägerfrequenz-Index-Sequenz (CF),
eine binäre Baud-Raten-Index-Sequenz (BR),
eine binäre Roll-Off-Factor-Index-Sequenz (RO),
eine binäre Modulationsindex-Sequenz (M).

Die Länge der genannten Felder ist systemspezifisch, wobei diese Information beim Empfänger vorhanden sein sollte. Die Synchronisierungssequenz (S) kann jegliche Länge aufweisen, die ausreicht, um eine zuverlässige Identifikation des Beginns der Physical-Layer-Frame-Identifizierungssequenz zu ermöglichen. Dies kann beispielsweise durch eine Korrelation mit der bekannten Sequenz beim Empfänger erfolgen. Ein Beispiel für eine Synchronisationssequenz, in der ein 32 Bit Synchronisationswort verwendet wird, ist im Folgenden dargestellt:
11110011001110110111110010001111

Das nächste Feld identifiziert, welchen Beam der Physical-Layer-Frame zugeordnet wird. In einem System mit 150 Beams, wie es beispielsweise im Fall von Fig. 1 und 2 beschrieben ist, sind 8 Bit ausreichend, um diese Information darzustellen. Ein Beispiel für das BI-Feld für Beam 67 unter Verwendung einer Dezimal-Binär Umwandlung ist wie folgt:
01000011

Abhängig von der Anzahl der Träger, die einem Beam zugeordnet sind, wird die Länge des Trägerfrequenzfeldes festgelegt. In einem System mit drei Trägern pro Beam, wie es beispielweise in Veröffentlichungen 1 bis 4 beschrieben ist, sind 2 Bit ausreichend. Ein Beispiel für das CF-Feld des zweiten Trägers unter Verwendung von Dezimal-Binärumwandlung ist wie folgt:
10

Da die Baud Rate variabel sein kann, wird im BR Feld eine 64 Bit doppelte genaue Gleitkommazahl verwendet.

Ein Beispiel für einen 425 Msps Träger lautet:
0100000110111001010101001111110001000000000000000000000000000000

Zusätzlich zur Baud-Rate wird der Roll-Off-Faktor des Trägers im RO-Feld angegeben. Für ein System mit sechs unterschiedlichen Optionen für Roll-Off-Faktoren (gemäß Veröffentlichung [3] und [4] 5%, 10%, 15%, 20%, 25% und 35%) sind 3 Bit ausreichend, um im RO-Feld die genannte Information anzugeben. Wenn die Roll-Off-Faktoren in der genannten Reihenfolge verwendet werden, wäre ein beispielhafer Roll-Off-Faktor von 20% unter Verwendung einer Dezimalbinärumwandlung:
100

Schließlich wird der MODCOD Index im M-Feld angegeben. Ausgehend von den 112 MODCODs, die in DVB-S2X spezifiziert sind (siehe Veröffentlichung [3) und [4]) sind 7 Bit ausreichend, um diese Information zu enthalten. Ein Beispiel für den MODCOD mit Index 45 unter Verwendung einer Dezimalbinärumwandlung ist:
0101101

Im Ergebnis ist die Gesamtbitanzahl im Physical-Layer-Frame Identifizierer 116 Bits. Ausgehend von einer Länge eines kurzen Physical-Layer-Frames von 16.200 Symbolen entsteht hierdurch ein Overhead von 0,72 %, der somit vernachlässigbar ist.

Nach der Definition des Physical-Layer-Frame Identifizierers wird die Zusammensetzung des zu übertragenden Bitstroms über dem optischen Feeder-Link betrachtet. Ein Satellit mit hohem Durchsatz kann bis zu 150 User Beams bedienen (siehe Veröffentlichung [2]). Der Datenverkehr in jedem Beam wird drei Trägern mit beispielsweise einer Symbolrate von 425 Msps zugeordnet, was in einer Gesamtsymbolrate von 1275 Msps pro Beams resultiert. Unter Verwendung des MODCOD mit der höchsten Modulationsordnung und dem höchsten Coding Overhead, zum Beispiel 256 APSK mit einer Coderate von 29/45 kann eine maximale Bitrate von etwa 15,8 Gbps pro Beam erreicht werden, unter Verwendung eines 0,4-nm GWDM Grid. Mit 50 GHz Kanälen kann der Datenverkehr für drei Beams gemultiplext werden. Der gemultiplexte Bitstrom wird auf dem optischen Träger (dem Laser) unter Verwendung von kohärenter QPSK Modulation moduliert. Das resultierende optische Signal wird einem DWDM Kanal zugeführt.

Die gesamte erforderliche Bandbreite für alle 150 Beams beträgt daher (0.4 x 150 / 3) nm = 20 nm. Im Ergebnis kann der gesamte Datenverkehr im Forward Feeder Link sehr gut innerhalb des optischen L-Bandes zwischen 1.565 nm bis 1625 nm angeordnet werden, so dass lediglich ein einziges optisches Gateway benötigt wird. Dies ist eine signifikante Verringerung verglichen zu den 29 RF Q/V Band Gateways, die gemäß Veröffentlichung 2 benötigt werden.

## Patentansprüche

1. Verfahren zum Übertragen eines binären Datensignals über einen optischen Feeder Link zu oder von einem Satelliten,
wobei ein optisches Sende-Interface die folgenden Schritte durchführt:
Multiplexing von binären Physical-Layer-Frames, die mehreren Trägern, und/oder mehreren Beams im Satellitenkommunikationssystem zugeordnet sind, in einen einzigen Bitstrom,
Einfügen einer binären Physical-Layer-Frame-Identifizierungssequenz vor jedem Physical-Layer-Frame, wobei die Physical-Layer-Frame-Identifizierungssequenz aufweist:
eine eindeutige binäre Synchronisationssequenz,
eine binäre Beam-Index-Sequenz,
eine binäre Trägerfrequenz-Index-Sequenz,
eine binäre Baud-Raten-Index-Sequenz,
eine binäre Roll-Off-Factor-Index-Sequenz,
eine binäre Modulationsindex-Sequenz.

2. Verfahren nach Anspruch 1, **dadurch gekennzeichnet, dass** zumindest einige Sequenzen der Physical-Layer-Frame-Identifikationssequenz Redundanzbits aufweisen.

3. Verfahren nach Anspruch 1 oder 2, **dadurch gekennzeichnet, dass** das optische Sendeinterface einen Datenpuffer zur Speicherung des binären Datenstroms der Physical-Layer-Frames aufweist.

4. Verfahren nach einem der Ansprüche 1 bis 3, **dadurch gekennzeichnet, dass** der binäre Datenstrom am Ausgang des optischen Sendeinterface verwendet wird, um ein optisches Trägersignal eines Laser in einem Dense Wave Length Division Multiplexing, DWDM, -Kanal zu modulieren.

5. Verfahren nach Anspruch 4, **dadurch gekennzeichnet, dass** zur Modulation des optischen Trägersignals kohärente Modulation, insbesondere Amplituden- oder Phasenmodulation verwendet wird.

6. Verfahren nach Anspruch 4, **dadurch gekennzeichnet, dass** zur Modulation des optischen Trägersignals inkohärente Intensitätsmodulation, insbesondere Puls-Amplituden- oder Puls-Position-Modulation verwendet wird.

7. Verfahren zum Empfangen und Verarbeiten eines binären Datensignals, das über einen optischen Feeder-Link zu oder von einem Satelliten, gemäß einem Verfahren nach einem der Ansprüche 1 bis 6, übertragen wurde,
wobei ein optisches Empfangs-Interface die folgenden Schritte durchführt:
Synchronisation des binären Datenstroms unter Verwendung der eindeutigen binären Synchronisationssequenz, und
Extraktion der entsprechenden Physical-Layer-Frames.

8. Verfahren nach Anspruch 7, **gekennzeichnet durch** den zusätzlichen Schritt:
Entfernen der Redundanzbits in der Physical-Layer-Frame-Identifikationssequenz.

9. Verfahren nach Anspruch 7 oder 8, **dadurch gekennzeichnet, dass** jeder optische Träger im DWDM-Kanal durch eine Photodiode und einen Demodulator demoduliert wird, um den digitalen Bitstrom wiederherzustellen.

10. Verfahren nach Anspruch 7 bis 9, **dadurch gekennzeichnet, dass** die Physical-Layer-Frames moduliert und durch Pulse-Shaping bearbeitet werden, um ein Trägersignal zu bilden, gemäß dem Modulationsindex, dem Roll-Off-Faktor-Index und dem Baud-Raten-Index in der Physical-Layer-Frame-Identifizierungssequenz.

11. Verfahren nach Anspruch 7 bis 10, **dadurch gekennzeichnet, dass** die Träger gemultiplext und hochkonvertiert werden gemäß dem Trägerfrequenzindex und dem Beam-Index in der Physical-Layer-Frame-Indentifikationssequenz.

## Claims

1. A method for transmitting a binary data signal to or from a satellite via an optical feeder link,
wherein an optical transmitter interface performs the following steps:
multiplexing binary physical layer frames, associated with a plurality of carriers and/or a plurality of beams in a satellite communication system, into a single bit stream,
inserting a binary physical layer frame identification sequence in front of each physical layer frame, wherein the physical layer frame identification sequence comprises:
a unique binary synchronization sequence,
a binary beam index sequence,
a binary carrier frequency index sequence,
a binary baud rate index sequence,
a binary roll-off factor index sequence,
a binary modulation index sequence.

2. The method according to claim 2, **characterized in that** at least some sequences of the physical layer frame identification sequence comprise redundancy bits.

3. The method according to claim 1 or 2, **characterized in that** the optical transmitter interface comprises a data buffer for storing the binary data stream of the physical layer frames.

4. The method according to any one of claims 1 to 3, **characterized in that** the binary data stream at the output of the optical transmitter interface is used for modulating an optical carrier signal of a laser in a dense wave length division multiplexing, DWDM, channel.

5. The method according to claim 4, **characterized in that** for the modulation of the optical carrier signal a coherent modulation, in particular an amplitude or phase modulation, is used.

6. The method according to claim 4, **characterized in that** for the modulation of the optical carrier signal an incoherent intensity modulation, in particular a pulse amplitude or pulse position modulation, is used.

7. A method for receiving and processing a binary data signal which has been transmitted to or from a satellite via an optical feeder link in accordance with a method according to any one of claims 1 to 6,
wherein an optical receiver interface performs the following steps:
synchronizing a binary data stream using the unique binary synchronization sequence, and
extracting the corresponding physical layer frames.

8. The method according to claim 7, **characterized by** the further step:
removing the redundancy bits in the physical layer frame identification sequence.

9. The method according to claim 7 or 8, **characterized in that** each optical carrier in the DWDM channel is demodulated by a photo diode and a demodulator for restoring the digital bit stream.

10. The method according to claim 7 to 9, **characterized in that** the physical layer frames are modulated and processed by pulse shaping for producing a carrier signal in accordance with the modulation index, the roll-off factor index and the baud rate index in the physical layer frame identification sequence.

11. The method according to claim 7 to 10, **characterized in that** the carriers are multiplexed and upconverted in accordance with the carrier frequency index and the beam index in the physical layer frame identification sequence.

## Revendications

1. Procédé de transmission d'un signal de données binaire par le biais d'une liaison de connexion optique vers ou depuis un satellite,
dans lequel une interface d'émission optique exécute les étapes suivantes :
multiplexage de trames de couche physique binaires, lesquelles sont associées à plusieurs porteuses, et/ou à plusieurs faisceaux dans le système de télécommunication par satellite, en un unique train binaire,
insertion d'une séquence d'identification de trame de couche physique binaire devant chaque trame de couche physique, dans lequel la séquence d'identification de trame de couche physique comporte :
une séquence de synchronisation binaire univoque,
une séquence binaire d'indice de faisceau,
une séquence binaire d'indice de fréquence porteuse,
une séquence binaire d'indice de vitesse de transmission,
une séquence binaire d'indice de facteur d'atténuation,
une séquence binaire d'indice de modulation.

2. Procédé selon la revendication 1, **caractérisé en ce qu'**au moins certaines séquences de la séquence d'identification de trame de couche physique comportent des bits de redondance.

3. Procédé selon la revendication 1 ou 2, **caractérisé en ce que** l'interface d'émission optique comporte un tampon de données afin d'enregistrer le flux de données binaire des trames de couche physique.

4. Procédé selon l'une des revendications 1 à 3, **caractérisé en ce que** le flux de données binaire à la sortie de l'interface d'émission optique est utilisé afin de moduler un signal porteur optique d'un laser dans un canal de multiplexage dense en longueur d'onde ou DWDM.

5. Procédé selon la revendication 4, **caractérisé en ce que** pour la modulation du signal porteur optique une modulation cohérente, en particulier une modulation d'amplitude ou de phase, est utilisée.

6. Procédé selon la revendication 4, **caractérisé en ce que** pour la modulation du signal porteur optique une modulation d'intensité non cohérente, en particulier une modulation d'impulsions en amplitude ou en position d'impulsions, est utilisée.

7. Procédé de réception et de traitement d'un signal de données binaire,
lequel est transmis par le biais d'une liaison de connexion optique vers ou depuis un satellite, d'après un procédé selon l'une des revendications 1 à 6,
dans lequel une interface de réception optique exécute les étapes suivantes :
synchronisation du flux de données binaire en utilisant la séquence de synchronisation binaire univoque, et
extraction des trames de couche physique correspondantes.

8. Procédé selon la revendication 7, **caractérisé par** l'étape supplémentaire :
élimination des bits de redondance dans la séquence d'identification de trame de couche physique.

9. Procédé selon la revendication 7 ou 8, **caractérisé en ce que** chaque porteuse optique dans le canal DWDM est démodulée par une photodiode et un démodulateur, afin de reconstituer le train binaire numérique.

10. Procédé selon la revendication 7 à 9, **caractérisé en ce que** les trames de couche physique sont modulées et traitées par conformation des impulsions, afin de former un signal porteur, d'après l'indice de modulation, l'indice de facteur d'atténuation et l'indice de vitesse de transmission dans la séquence d'identification de trame de couche physique.

11. Procédé selon la revendication 7 à 10, **caractérisé en ce que** les porteuses sont soumises à multiplexage et conversion ascendante d'après l'indice de fréquence porteuse et l'indice de faisceau dans la séquence d'identification de trame de couche physique.
